# FASCICULE DE BREVET EUROPEEN

(11) **EP 1 189 850 B1**
(45) Date de publication et mention de la délivrance du brevet: **03.10.2012**
(21) Numéro de dépôt: 00925375.8
(22) Date de dépôt: 03.05.2000
(51) Int. Cl.: C04B 28/02, E04F 15/12, C04B 14/06, C04B 103/32, C04B 111/62

(54) **BETON POUR LA CONSTRUCTION DE CHAPES AUTO-NIVELANTES ET SON PROCEDE D'UTILISATION**
BETON FÜR SELBSTNIVELLIERENDE FLIESSESTRICHE, UND VERFAHREN ZUR VERWENDUNG
CONCRETE FOR BUILDING SELF-LEVELLING FLOORS AND METHOD FOR USING SAME

(30) Priorité: 04.05.1999 FR 9905643
(43) Date de publication de la demande: 27.03.2002
(60) Demande divisionnaire: 10162859.2
(73) Titulaire: Electricité de France, 75008 Paris (FR)
(72) Inventeur: JACQUEMMOZ, Christian, F-13090 Aix en Provence (FR); RENAUD, Dominique, F-77670 Saint Nammes (FR); MERTENS, Christian, F-77670 Saint Nammes (FR)
(74) Mandataire: Domenego, Bertrand
(86) Numéro de dépôt international: PCT/FR2000/001189
(87) Numéro de publication internationale: WO 2000/066512

(56) Documents cités:
- EP-A- 0 753 489
- FR-A- 2 665 698
- FR-A- 2 763 063
- FR-A- 2 763 065
- US-A- 5 873 936

## Description

### Domaine de l'invention

Le domaine de l'invention est celui de la construction des bâtiments en béton et, en particulier, de la réalisation des chapes devant former des planchers. L'invention s'applique aussi bien aux bâtiments neufs, qu'aux bâtiments en cours de rénovation. Elle s'applique également, en particulier, aux planchers avec des câbles électriques et aux planchers chauffants/rafraîchissants à circulation de fluides.

### Définitions

- Béton : Ce terme est utilisé dans la présente demande de brevet pour qualifier le mélange de tous les ingrédients utilisés pour réaliser une chape en béton. Il faut tenir compte du fait que ce dernier terme "chape" est souvent utilisé dans le jargon du métier pour qualifier de tels mélanges et les produits obtenus. On utilise également, dans le métier, le terme "mortier" pour qualifier le béton ou une partie des ingrédients constituant le béton. En effet, suivant les différents constituants rentrant dans la composition du mélange, le terme peut être différent. On pense, en particulier, au terme "béton", quand la teneur de graviers est plus ou moins importante et au terme "mortier", quand il y a beaucoup plus de particules fines.
- Charge : Ce terme désigne le matériau solide, minéral ou organique, relativement inerte et inactif, ajouté à un mélange pour en augmenter le volume, modifier sa résistance, sa stabilité, ses propriétés de mise en oeuvre ou autres et d'en abaisser le coût.
- Matrice : Ce terme est utilisé pour qualifier tous les ingrédients et produits rentrant dans la composition du béton, en dehors de la charge et un ou plusieurs ajouts éventuels. Dans la composition de cette matrice rentre un liant organique ou un liant hydraulique ou un mélange des deux. La matrice contient l'eau d'ajout.
- Liant : Ce terme désigne tous les éléments solides de la matrice.
- Liant hydraulique ou organique : Ce terme est utilisé pour désigner la poudre minérale (par exemple, chaux hydraulique, ciment, plâtre) ou organique qui forme avec de l'eau une pâte faisant prise et durcissant progressivement.
- Ajout(s) : Ce terme désigne un ou plusieurs adjuvant(s) additif(s) ou complément(s) qui représente(nt) une quantité de produit solide ou liquide qui viennent en supplément de la charge et de la matrice et dont le poids est inférieur à 60 kg/m³.

### Art antérieur et problème posé

On distingue couramment deux types de bétons permettant de mettre en oeuvre deux types de chapes, en matière de construction de bâtiments. On distingue donc les bétons permettant de réaliser des chapes, dites "traditionnelles", et ceux permettant de réaliser des chapes, dites "auto-lissantes" ou "auto-nivelantes" ou bien "auto-plaçantes" ou fluides. Les chapes traditionnelles, une fois coulées, nécessitent l'utilisation de dispositifs mécaniques pour que l'ensemble du mélange coulé dans le coffrage s'étale de manière égale sur toute la superficie du coffrage, et pour que la surface supérieure du mélange coulé soit parfaitement plane et horizontale. On utilise ainsi fréquemment des dispositifs de mise en vibrations de compactage et de réglage.

Les chapes, dites "auto-lissantes" ou "auto-nivelantes" ou bien "auto-plaçantes" ou fluides, ont une composition qui permet d'obtenir, sans intervention extérieure, l'étalement parfait du mélange coulé, celui-ci s'effectuant donc seul, par gravité, et grâce à la composition du mélange coulé. Ceci permet d'éviter l'intervention d'opérateurs et de matériels, tels que des règles pour égaliser et éviter également les opérations de réglage et de talochage qui sont longues et coûteuses.

De plus, dans la réalisation des chapes, on éprouve beaucoup de difficulté à réaliser des chapes dont l'épaisseur varie de 10 à 60 mm, avec une seule formule de béton, c'est-à-dire sans procéder à deux coulages différents.

Par ailleurs, le béton des chapes peut présenter un phénomène de ressuage problématique ou non qui se traduit par une épaisseur d'eau à la surface du béton après sa mise en place.

Un exemple de composition d'un béton, dans le but de réaliser des chapes auto-lissantes ou auto-nivelantes, est le suivant, pour un mètre cube de matériau sec :

| | | | |
|---|---|---|---|
| - Ciment : | CPA-CEM 52, 5 ou 52, 5 R | 280 kg | |
| | Ou CPJ-CEM II/A 42, 5 | 350 kg | Au total 500 kg d'éléments fins à 80 µm |
| - Addictions : | Filler calcaire (0/80 à 0/130 µm) | 150 à 220 kg | |
| | Ou cendres volantes silico-alumineuses | 150 à 220 kg | |
| - Sable 0/4 ou 0/5 mm silico-calcaire | | 1 350 kg | |
| . passants aux tamis de | 160 µm 7 à 15 % | | |
| | 315 µm 15 à 40 % | | |
| | 630 µm 45 à 70 % | | |
| - Rapport eau/liant : | 0,53 à 0,57 | 265 à 285 kg | Selon la nature des matériaux |
| - Additif SIKACHAP FLUID (1 sac/m³) | | 25 kg | |

Le but de l'invention est donc de remédier aux inconvénients précités, en proposant une formule de béton permettant de pouvoir réaliser des chapes pouvant avoir une épaisseur variant de 10 à 60 mm étant auto-nivelantes, possédant des résistances mécaniques élevées et une durée d'utilisation d'au moins quatre heures et sans ressuage problématique.

### Résumé de l'invention

A cet effet, l'invention a pour objet un béton conforme à la revendication 1.

On rappelle que le Flowtest est un test de résistance ou de tendance à l'étalement, qui consiste à soumettre à l'étalement un volume déterminé de mélange rassemblé dans un conteneur de forme déterminée, que l'on renverse sur une surface plane, de manière analogue à la confection de pâtés de sable.

Les revendications 2 à 6 précisent des caractéristiques facultatives du béton.

D'autres ajouts que ceux des revendications 2 à 6 peuvent être utilisés.

L'invention a également pour objet un procédé d'utilisation d'un béton conforme à la revendication 7.

Les revendications 8 et 9 précisent des caractéristiques facultatives de ce procédé.

On rappelle que le Flowtest est un test de résistance ou de tendance à l'étalement, qui consiste à soumettre à l'étalement un volume déterminé de mélange rassemblé dans un conteneur de forme déterminée, que l'on renverse sur une surface plane, de manière analogue à la confection de pâtés de sable.

Les revendications 2 à 20 précisent des caractéristiques facultatives du béton.

D'autres ajouts que ceux des revendications 2 à 20 peuvent être utilisés.

L'invention a également pour objet un procédé d'utilisation d'un béton conforme à la revendication 21. Les revendications 22 et 23 précisent des caractéristiques facultatives de ce procédé.

### Description détaillée d'une réalisation de l'invention

Les bétons, définis par la présente invention, retrouvent une formule de base qui est celle définie par les deux premières phrases du chapitre "Résumé de l'invention" et qui sont détaillés dans les paragraphes suivants.

La première caractéristique technique importante est l'utilisation d'un volume de matrice suffisant pour obtenir un résultat égal ou supérieur à 18 cm au Flowtest. Par ce test, on mesure l'étalement d'une quantité déterminée du mélange constituant le béton. Le diamètre moyen du tas du mélange à la fin du test doit être supérieur ou égal à 18 cm, dans le cas de la norme ASTM C 243, le test étant effectué sans secousses.

La matrice comprend plusieurs constituants et, en particulier, un liant hydraulique, comme du ciment, et éventuellement un liant organique.

Il est possible d'ajouter au liant hydraulique des fines (ou un filler) calcaires, siliceuses ou d'une autre nature.

D'autres matériaux, tels que des cendres volantes ou des matériaux ultrafins du type fumées de silice et/ou de la silice précipitée et/ou de la silice colloïdale, peuvent être également ajoutés.

Des constituants, tels que des cendres micronisées, du métakaolin, du kesilghur peuvent également entrer dans la matrice.

Toujours dans la matrice, on peut utiliser des constituants que l'on qualifiera de légers, c'est-à-dire dont la masse volumique est inférieure à 2,65 T/m³, comme par exemple de la vermiculite ou du polystyrène expansé, tout comme on peut utiliser des matériaux qualifiés de lourd dans la mesure ou leur masse volumique est supérieure à celle des liants hydraulique, par exemple de l'hématite.

Il est également possible d'utiliser des déchets quelconques, tant que leur granulométrie est compatible avec le reste de la matrice et qu'ils ne sont pas de nature à la dégrader.

Sans être restrictif, on peut citer, par exemple, des morceaux de pneus recyclés, du béton recyclé, des cendres de terrils.

Enfin, des résines ou autres constituants organiques peuvent être ajoutés, dès l'instant qu'ils n'interfèrent pas le liant hydraulique utilisé.

On note que les éléments pris en compte dans la matrice peuvent être solides et/ou liquides.

Tous ces éléments, précédemment cités ainsi que l'eau, peuvent être utilisés pour constituer la matrice du béton selon la présente invention.

Le volume total de la matrice est fonction de la granulométrie de la charge, constituée par exemple de sable, et des ajouts, et qui viennent en complément de la matrice pour obtenir un volume d'un mètre cube théorique de référence. A titre indicatif, un sable, dont la granulométrie maximale est proche de 1,3 mm et un volume de matrice de 420 1 environ, conviennent très bien.

La deuxième caractéristique importante du béton selon l'invention est le rapport eau/liant. Quand celui-ci est compris entre 0,20 et 0,40, le béton selon l'invention répond à tous les critères du cahier des charges. Ce rapport eau/liant intervient directement sur les performances physiques et mécaniques de la chape obtenue et, en particulier, sur la conductivité thermique.

Le volume d'eau par mètre cube de béton se définit par le rapport E/L (eau/liant).

Les moyens de régler le rapport E/L, c'est-à-dire eau/liant, sont la mesure de l'étalement au Flowtest, la mesure des résistances mécaniques, du retrait, du module d'élasticité, de la conductivité thermique sur éprouvettes.

La troisième caractéristique technique importante du béton selon l'invention est la définition de la granulométrie, cette dernière ayant une incidence sur la rhéologie du béton. Un des objectifs est d'éviter la ségrégation du mélange. Les dimensions de grains doivent donc être adaptées. A cet effet, on tient compte du fait que, plus la dimension maximale des grains est faible, moins le béton a tendance à subir une ségrégation.

Une granulométrie maximale, de l'ordre de 1,3 mm, convient parfaitement bien. Toutefois, cette taille maximale des grains constituant la charge peut être comprise entre 0,4 et 5 mm. Ceci facilite la résolution du problème de l'approvisionnement en matériau de charge. Quoi qu'il en soit, l'ensemble de la matrice doit avoir un volume suffisant pour que le mélange du béton réponde au Flowtest, comme précédemment défini.

La nature du matériau qui constitue les grains, comme par exemple le sable, a également une importance car il est préférable d'utiliser un matériau qui absorbe relativement peu d'eau, par exemple moins de 4 % de son poids. De plus, la résistance mécanique du matériau n'est pas fondamentale, puisque la matrice est en mesure d'assurer une résistance élevée au béton obtenu.

On peut employer comme constituants de la charge des matériaux de différentes natures et, sans être restrictif, on peut citer, par exemple, des granulats, tels que le sable naturel et/ou concassé, des granulats légers et/ou lourds, des déchets, comme par exemple du béton recyclé, des éléments de pneus, des déchets plastiques.

Une autre caractéristique importante du béton selon l'invention est la quantité de liant hydraulique qui est définie entre 250 et 500 kg/m³ de mélange fini.

Pour le liant hydraulique, la quantité de matière active pour le développement des hydrates doit être supérieure à 60 kg/m³ et il n'est pas nécessaire de fixer une limite supérieure. Pour le liant organique, toutes les solutions peuvent être envisagées sur la base d'un dosage minimum de 0,5 kg/m³. Les moyens de régler le dosage du liant sont la mesure de l'étalement au Flowtest, des résistances mécaniques, du module d'élasticité, du retrait sur éprouvettes ou in situ.

De nombreux ajouts peuvent être utilisés dans le but d'assurer des performances mécaniques ou rhéologiques adaptées à chaque cas. Toutefois, la présence d'ajouts composés d'au moins un réducteur d'eau constitué d'au moins un défloculant, couplé ou non avec un viscosant est indispensable. On notera qu'un même produit peut cumuler plusieurs fonctions comme, par exemple, un plastifiant réducteur d'eau qui permet de défloculer les éléments fins. D'autre part, le réducteur d'eau peut fonctionner en bloquant temporairement l'hydratation du liant pour disposer d'une quantité d'eau supérieure afin de fluidifier le béton. Ces ajouts peuvent se présenter sous une forme solide et/ou liquide et, comme exemple, on peut donner des plastifiants, des superplastifiants, des fluidifiants, des gommes de welan, de la silice précipitée et/ou colloïdale, des gommes de xanthane. Les moyens de régler le dosage des ajouts sont la mesure de l'étalement au Flowtest, des résistances mécaniques, du module d'élasticité, du retrait sur éprouvettes ou in situ.

Des exemples d'autres ajouts utilisés sont définis dans les paragraphes suivants.

Un ou plusieurs agents expanseurs sont souvent utilisés pour diminuer le retrait et surtout conférer à la structure du béton obtenu une absence de fissuration sur des surfaces très importantes. Le dosage de tels agents dépend de leur efficacité, de la mesure du Flowtest et de la valeur du retrait mesuré sur les éprouvettes.

Il n'est pas nécessaire de fixer de dosage, d'autant plus qu'il peut s'agir d'une expansion gazeuse ou minérale.

Des produits réducteurs de retrait, tels que des plastifiants réducteurs d'eau et/ou produits dits "super-plastifiants" et/ou fluidifiants, sont très utiles pour réduire le retrait du béton obtenu. Ceci a pour conséquence d'influer sur la fissuration du béton. A titre d'exemple, un dosage variant de 0,3 à 5 % de la masse solide de la matrice donne d'excellents résultats. Le moyen de régler le dosage de ces produits est, par exemple, la mesure du retrait sur des éprouvettes ou in situ. On peut réduire le retrait par la capacité du produit à retenir l'eau à l'intérieur de la matrice, en utilisant un ou plusieurs rétenteur(s) d'eau, comme c'est le cas pour des produits à base de gypse ou équivalent pour le résultat qui peuvent être minéraux et/ou organiques. D'autres produits peuvent éventuellement être utilisés, leur efficacité et leurs dosages étant validés par le Flowtest et la mesure du retrait sur éprouvettes ou in situ.

L'utilisation d'un retardateur de prise, qui permet d'augmenter la durée pratique d'utilisation du mortier, est utile, mais non indispensable. On peut également utiliser, sans que cela soit indispensable, un retardateur de durcissement ou un produit combinant les deux fonctions. Le réglage du dosage peut s'effectuer en mesurant le temps de prise et de durcissement sur éprouvettes ou in situ.

Il en est de même pour des éléments entraîneurs d'air contribuant, entre autres, au comportement rhéologique du béton et sa tenue au gel et au dégel. Les moyens de régler le dosage sont la mesure du Flowtest, des résistances mécaniques, du retrait, du module d'élasticité et de l'air occlus sur éprouvettes ou in situ.

Des réducteurs de retrait de la famille des glycols ou équivalents peuvent être utilisés, ceux-ci limitant la fissuration du mortier et améliorant le côté auto-lissant ou auto-nivelant du mélange coulé. Ce type d'adjuvant permet également de réduire l'adhérence du béton et de faciliter le nettoyage du matériel. Le dosage d'un tel produit peut être, par exemple, de l'ordre de 1 à 4 % du poids du liant hydraulique. Les moyens de régler le dosage sont la mesure du Flowtest, des résistances mécaniques, du retrait, du module d'élasticité et du ressuage sur éprouvettes in situ.

Des agents viscosants permettent de stabiliser le béton lors de sa mise en oeuvre, d'éviter la ségrégation et de lui conférer un caractère colloïdal ou thixotrope qui permet la mise en oeuvre d'épaisseur importante, sans décantation du mélange coulé. La nature et le dosage de ces agents n'ont pas à être figés. A titre d'exemple, un dosage inférieur à 1 kg/m³ est souvent suffisant, si le produit est efficace, mais il peut être beaucoup plus conséquent, dans le cas d'utilisation de silice précipitée et/ou colloïdale et éventuellement de fumées de silice. Le dosage et la nature du produit peuvent toujours être quantifiés au moyen de l'essai du Flowtest ou en employant un scissomètre.

Des fibres de nature et/ou de dosage différent(s) peuvent contribuer à modifier le comportement du béton à l'état frais ou durci. Un dosage de l'ordre de 0,6 à 2 kg/m³ peut être suffisant, bien qu'on puisse aller au-delà et en deçà de ces valeurs. Les moyens de réglage du dosage peuvent être la mesure de résistance en flexion et du retrait sur éprouvettes.

D'autres types d'ajouts sont utilisables :
- accélérateur de prise, avec comme moyen de réglage du dosage, la mesure du temps de prise avec les techniques d'essai normalisées ou adaptées ;
- accélérateur de durcissement, avec comme moyen de réglage du dosage, la mesure du temps de prise avec les techniques d'essai normalisées ou adaptées ;
- agent anti-moussant, avec, par exemple, comme moyen de réglage du dosage, le contrôle de l'air occlus au moyen d'un aéromètre, ou la mesure de la masse volumique sur éprouvettes ou in situ ;
- hydrofuge avec comme moyen de réglage du dosage la mesure de la perméabilité à l'eau ou de l'absorption capillaire mesurée sur éprouvettes ou in situ ;
- agent de protection contre le gel, avec comme moyen de réglage du dosage, la tenue du béton au cycle de gel/dégel mesuré sur éprouvettes ;
- fongicide ;
- algicide ;
- pigments ;
- colorants ;
- agent thixotropant, avec comme moyen de réglage le Flowtest, à différentes échéances ou la mesure de la viscosité du produit avec un scissomètre, par exemple ;
- inhibiteur de réaction alcali-granulats, avec comme moyen de réglage du dosage, la mesure de variation dimensionnelle d'éprouvettes conservées dans un milieu propice à la réaction ;
- agent d'empêchement de délavage avec, comme moyen de réglage du dosage, un essai de délavage, c'est-à-dire tester la capacité à rester homogène quant il est confronté à l'eau ;
- agent pour augmenter l'adhérence avec, comme moyen de réglage du dosage, une mesure d'adhérence du béton sur plusieurs supports éventuellement.

### Exemple de béton

Un exemple de formule de béton est donné dans les lignes suivantes, les différentes quantités de produits étant exprimées en kilogrammes :
- charge (en sable) : 1 410 ;
- matrice : 877, dont 172 d'eau ;
- super-plastifiant : 5 ;
- réducteur de retrait : 8,5 ;
- expanseur : 24 ;
- fibres : 2 ;
- agent viscosant : 0,5.

### Avantages du béton selon l'invention

Le béton selon l'invention présente un caractère auto-lissant ou auto-nivelant, ce qui permet d'éviter la mise en place de matériels pour égaliser le réglage et le talochage de la chape, une fois coulée. Ceci économise donc des heures de travail pour les compagnons ou opérateurs. De ce fait, le travail est rendu moins pénible puisqu'il n'est plus nécessaire de travailler penché ou en appui sur les genoux.

Il permet d'assurer un enrobage parfait des conduits ou des câbles chauffants qui doivent se trouver noyés dans la chape, dans le cas d'un plancher chauffant. En effet, les bétons traditionnels provoquent beaucoup de vides dans les chapes actuellement coulées, entre les éléments chauffants et le béton.

Il permet de réaliser des chapes dont l'épaisseur varie de 10 à 60 mm et dispense donc de réaliser de telles chapes en deux fois, c'est-à-dire deux coulées.

Le béton selon l'invention est conforme aux normes et aux D. T. U. (Document Technique Unifié) en vigueur, par exemple, sur la masse volumique minimale à mettre en oeuvre qui doit être supérieure à 2 200 kg/m³ et la planéité qui peut être inférieure à 5 mm, à la règle de 2 m, et à 2 mm, à la règle de 20 cm.

L'utilisation de produits réducteurs de retrait et d'adjuvant(s) permet, en particulier, de disposer d'une durée pratique d'utilisation du mortier de 4 h, voire plus si nécessaire. Elle permet également de diminuer l'usure du matériel de pompage qui est utilisé pour la mise en oeuvre, en diminuant le frottement entre le béton et l'intérieur de la canalisation de pompage. Elle permet au béton d'être utilisé aussi bien par des moyens de transport traditionnels que par des matériels de pompage. L'adjonction de produits réducteurs de retrait permet également d'éviter la cure du béton, car il protège la surface de la chape réalisée par rapport à la dessiccation. Enfin, elle permet de faciliter le nettoyage du matériel et des outils en faisant en sorte que le béton colle beaucoup moins avant et après son durcissement.

L'utilisation conjuguée de produits réducteurs de retrait, d'adjuvant(s) et d'expanseurs permet d'améliorer le coût de revient, en augmentant sensiblement le rendement, lorsque celui-ci est exprimé en mètres carrés par jour et par personne. Elle permet de réduire le planning de réalisation des ouvrages par la vitesse de réalisation et la disponibilité précoce des planchers réalisés. Elle permet de ne pas avoir de fissures continues dans l'épaisseur de la structure de la chape et qui peuvent être traversantes et permet donc de protéger les pièces noyées dans la chape de différentes agressions possibles. Elle permet également, dans ce cas, d'améliorer la réactivité des planchers chauffants par une conductivité thermique du matériau supérieure et par une réduction de l'épaisseur de la chape. Elle permet d'améliorer la disponibilité des planchers pour les travaux de revêtements de types moquette, carrelage, car il n'est pas nécessaire d'attendre 28 jours ou plus, puisque les performances mécaniques sont supérieures. Elle permet également d'être insensible à l'humidité et d'éviter les reprises d'eau, comme c'est le cas avec les matériaux à porosité accessible à l'eau. D'éventuels déformations ou gonflements consécutifs sont donc évités. Toujours dans ce cas, le béton selon l'invention permet d'éviter de protéger la surface du mortier au moyen de produits de cure, d'eau, de polyane (film de protection contre l'humidité), ou de tout autre système destiné à limiter la dessiccation, pour éviter la fissuration et obtenir des caractéristiques mécaniques suffisantes. On note que l'utilisation de moyens de protection n'est quand même pas incompatible avec le béton selon l'invention. Les réducteurs de retraits et les expanseurs permettent également d'éviter des dégradations liées aux déformations consécutives à des blocages thermiques, dans le cadre de la réalisation de planchers chauffants. Ils permettent également d'obtenir un rapport retrait/résistance en compression inférieur à 3,5, le retrait étant exprimé en micromètres par mètre et mesuré à 50 % HR et 20°C, la résistance en compression étant exprimée en MégaPascals, ces mesures étant effectuées suivant les normes en vigueur, dans l'AFNOR ou au niveau international. Enfin, ces deux adjuvants permettent d'éviter la présence d'armature ou de ferraillage.

En résumé, en tenant compte de toutes les possibilités de compositions avec les différents adjuvants possibles, le béton selon l'invention présente les avantages suivants :
- un caractère auto-lissant ou auto-nivelant ou auto-plaçant et fluide ;
- des résistances mécaniques élevées en compression, c'est-à-dire supérieures à 45 Mpa et pouvant dépasser 120 MPa ;
- des résistances mécaniques élevées en flexion, supérieures à 7 Mpa ;
- une durée pratique d'utilisation de 4 h, voire plus ;
- une conductivité thermique élevée, supérieure à 2 W/m.°K ;
- une utilisation possible pour des épaisseurs qui varient pour une même chape de 10 à 60 mm avec une seule formule de béton coulé en une fois ;
- une résistance élevée au poinçonnement de la surface ;
- une conformité aux normes et D. T. U. (Document Technique Unifié) en vigueur ;
- un retrait qui tend vers 0 µm/m ;
- une inutilité de la protection à la dessiccation de la surface de la chape coulée ;
- la possibilité d'engendrer une réactivité thermique élevée des planchers chauffants et des planchers rafraîchissants ;
- la possibilité de réduire le poids des structures par la réduction de l'épaisseur, ceci étant lié aux résistances mécaniques élevées ;
- la possibilité de disposer de planchers bien avant 28 jours pour la suite des travaux ;
- la facilité de nettoyage des outils et du matériel utilisé ;
- la possibilité de rendre le travail de réalisation des chapes moins pénible physiquement ;
- la faisabilité de mise en oeuvre avec les moyens actuels, tant au niveau du dosage des constituants, que de leur transport, ainsi que de leur mélange et de celui du béton, ainsi que sa mise en oeuvre avec tous les moyens adaptés, par exemple des pompes ;
- la stabilité de la chape par sa très faible reprise d'eau possible ;
- un rapport du retrait/résistance en compression inférieur à 3,5 ;
- la possibilité d'utiliser le même produit pour la construction neuve et pour la rénovation ;
- la compatibilité avec les matériaux que l'on trouve partout ;
- la possibilité d'utiliser ce béton dans des structures qui sont d'une géométrie différente de celle des planchers existants ;
- l'absence de ressuage.

## Revendications

1. Béton pour former des chapes auto-nivelantes ou auto-lissantes, constitué du mélange de :
- une matrice constituée d'un liant et d'eau, le liant étant constitué par tous les éléments solides de la matrice, à savoir un liant hydraulique, éventuellement un liant organique, et au moins un constituant choisi parmi des fines calcaires ou siliceuses, des cendres volantes ou des matériaux ultrafins du type fumées de silice et/ou de la silice précipitée et/ou de la silice colloïdale, des cendres micronisées, du métakaolin, ou du kesilghur,
- une charge constituée de matériaux de granulométrie déterminée choisis parmi des granulats, tels que le sable naturel et/ou concassé, des granulats légers et/ou lourds, des déchets, comme par exemple du béton recyclé, des éléments de pneus, des déchets plastiques,
- plusieurs ajouts, pour un poids inférieur à 60kg/m³, dont d'une part un superplastifiant réducteur d'eau constitué d'au moins un défloculant couplé ou non avec un viscosant, et d'autre part au moins un ajout choisi parmi les agents expanseurs, les réducteurs de retrait, et des fibres,
le volume de la matrice par mètre cube de mélange étant suffisant pour que le mélange obtienne un résultat supérieur ou égal à 18 cm au test du Flowtest de la norme ASTM C 243, le test étant effectué sans secousses ;
la granulométrie de la charge étant définie par un diamètre supérieur des grains pouvant être compris entre 0,4 et 5 mm ;
le rapport massique eau/liant étant compris entre 0,2
et 0,4 ; et
la proportion de liant hydraulique dans le mélange fini étant comprise entre 250 et 500 kg/m³, la quantité de matière active pour le développement des hydrates étant supérieure à 60 kg/m³.

2. Béton selon la revendication 1, **caractérisé en ce qu'**il comprend au moins un produit réducteur de retrait.

3. Béton selon la revendication 2, **caractérisé en ce que** le produit réducteur de retrait est un glycol.

4. Béton selon l'une des revendications précédentes, **caractérisé en ce qu'**il comprend des fibres.

5. Béton selon l'une des revendications précédentes, **caractérisé en ce qu'**il comprend au moins un agent expanseur.

6. Béton selon l'une des revendications précédentes, **caractérisé en ce qu'**il comprend des déchets.

7. Procédé d'utilisation d'un béton selon la revendication 1, **caractérisé en ce qu'**il consiste à être coulé en une seule fois pour réaliser des chapes dont les épaisseurs sont comprises entre 10 et 60 mm et
dont la résistance à la compression est supérieure à 45 Mpa.

8. Procédé d'utilisation d'un béton selon la revendication 7, **caractérisé en ce qu'**il consiste à laisser sécher le béton coulé sans moyen de protection de la surface à l'air libre de la chape.

9. Procédé d'utilisation d'un béton selon la revendication 7, **caractérisé en ce qu'**il consiste à couler le béton dans un coffrage dont le volume ne contient pas d'armatures, pour réaliser des chapes sans armatures.

## Claims

1. Concrete for casting into self-levelling or self-smoothing sheets consisting of a mixture of :
- a matrix consisting of a binder and water, whereby the binder is formed from all the solid elements of the binder, which is either a hydraulic binder or possibly an organic binder, and at least one constituent chosen from chalky or siliceous fines, volatile ash or smoked ultrafine materials such as silicon and/or of precipitated silicon and/or colloidal silicon, micronised ash, metakaolin or kieselguhr;
- a charge consisting of materials with a given granulometry, chosen from granulates, such as natural and/or crushed sand, light and/or heavy granulates, scrap materials such as, for example, recycled concrete, parts of vehicle tyres, plastic waste;
- various additives, giving a total weight of less than 60 kg/m3, one part of which is a superplasticising water reducer, consisting of at least one deflocculant, combined or not with a viscosing agent and also comprising at least one additive chosen from expanding or shrinking reducing agents and fibres;
with the volume of the matrix in terms of cubic metre of mixture being sufficient for the mixture to obtain a result equal to or greater than 18 cm in the flow test according to ASTM C 243, with the test being conducted without any shaking;
the granulometry of the charge being defined by an upper diameter of the grains being as between 0.4 and 5 mm;
the water/binder mass ratio being in the range of 0.2 and 0.4; and
the proportion of hydraulic binder in the final mixture being in the range of 250 and 500 kg/m3, the quantity of active material for the development of hydrates being greater than 60 kg/m3.

2. Concrete according to Claim 1 above, **characterised in that** it contains at least one shrinkage reducing agent.

3. Concrete according to Claim 2 above, **characterised in that** the shrinking reducing agent is a glycol.

4. Concrete according to either of the two preceding claims, **characterised in that** it contains fibres.

5. Concrete according to any of the preceding claims, **characterised in that** it contains at least one expanding agent.

6. Concrete according to any of the preceding claims, **characterised in that** it contains scrap material.

7. Process for using a concrete according to Claim 1 above, **characterised in that** it is produced in a single casting for the production of sheets with thicknesses of between 10 and 60 mm and with a compression strength in excess of 45 Mpa.

8. Process for using a concrete according to Claim 7, **characterised in that** it consists in allowing the cast concrete to dry without any means of surface protection against the free air of the sheet.

9. Process for using a concrete according to Claim 7, **characterised in that** it consists in casting the concrete into a formwork in a form that does not contain reinforcement so as to produce concrete sheets without reinforcement.

## Patentansprüche

1. Beton zum Bilden von selbstnivellierenden oder selbstglättenden Ausgleichsschichten, der durch ein Gemisch gebildet ist aus:
- einem Grundstoff, der aus einem Bindemittel und Wasser gebildet ist, wobei das Bindemittel durch sämtliche festen Elemente des Grundstoffs gebildet ist, nämlich aus einem hydraulischen Bindemittel, eventuell einem organischen Bindemittel und wenigstens einem Konstituenten, der aus kalkhaltigen oder silciumhaltigen Feinstoffen, flüchtigen Aschen oder ultrafeinen Materialien des Rauchtyps von Siliciumoxid und/oder ausgefälltem Siliciumoxid und/oder kolloidalem Siliciumoxid, mikronisierten Aschen aus Metakaolin oder Kieselgur gewählt ist,
- einer Füllmasse, die aus Materialien mit bestimmter Granulometrie gebildet ist, die aus Granulaten wie etwa natürlichem Sand und/oder zerkleinertem Sand, leichten und/oder schweren Granulaten, Abfällen wie beispielsweise wiedergewonnenem Beton, Reifenelementen und Kunststoffabfällen gewählt sind,
- mehreren Zusätzen für ein Gewicht geringer als 60 kg/m³, einerseits aus einem Wasserreduzierungs-Superweichmacher, der aus wenigstens einem mit einem Viskosemittel gekoppelten oder nicht gekoppelten Flockenzerstörer gebildet ist, und andererseits aus wenigstens einem Zusatz, der aus Expansionsmitteln, Schrumpfreduzierern und Fasern gewählt ist,
wobei das Volumen des Grundstoffs pro Kubikmeter des Gemisches ausreicht, damit das Gemisch ein Ergebnis größer oder gleich 18 cm im Test des Fließtests gemäß der Norm ASTM C 243 ergibt, wobei der Test unter Rütteln ausgeführt wird;
wobei die Granulometrie der Füllmasse durch einen oberen Durchmesser der Körner, der im Bereich von 0,4 bis 5 mm liegen kann, definiert ist;
wobei das Massenverhältnis von Wasser/Bindemittel im Bereich von 0,2 bis 0,4 liegt; und
wobei der Anteil des hydraulischen Bindemittels in dem Endgemisch im Bereich von 250 bis 500 kg/m³ liegt, wobei die Menge aktiven Materials für die Entwicklung von Hydraten größer als 60 kg/m³ ist.

2. Beton nach Anspruch 1, **dadurch gekennzeichnet, dass** er wenigstens ein Schrumpfreduziererprodukt enthält.

3. Beton nach Anspruch 2, **dadurch gekennzeichnet, dass** das Schrumpfreduziererprodukt ein Glycol ist.

4. Beton nach einem der vorhergehenden Ansprüche, **dadurch gekennzeichnet, dass** er Fasern enthält.

5. Beton nach einem der vorhergehenden Ansprüche, **dadurch gekennzeichnet, dass** er wenigstens ein Expansionsmittel enthält.

6. Beton nach einem der vorhergehenden Ansprüche, **dadurch gekennzeichnet, dass** er Abfälle enthält.

7. Verfahren zum Verwenden eines Betons nach Anspruch 1, **dadurch gekennzeichnet, dass** es darin besteht, auf einmal gegossen zu werden, um Ausgleichsschichten zu verwirklichen, deren Dicke im Bereich von 10 bis 60 mm liegt und deren Widerstand gegenüber Kompression größer als 45 MPa ist.

8. Betonverwendungsverfahren nach Anspruch 7, **dadurch gekennzeichnet, dass** es darin besteht, den gegossenen Beton ohne Mittel zum Schutz vor der Umgebungsluft der Oberfläche der Ausgleichsschicht trocknen zu lassen.

9. Betonverwendungsverfahren nach Anspruch 7, **dadurch gekennzeichnet, dass** es darin besteht, den Beton in eine Verschalung zu gießen, deren Volumen keine Bewehrungen enthält, um Ausgleichsschichten ohne Bewehrungen zu verwirklichen.
